# EUROPÄISCHE PATENTSCHRIFT

(11) **EP 0 805 056 B1**
(45) Veröffentlichungstag und Bekanntmachung des Hinweises auf die Patenterteilung: **20.11.2002**
(21) Anmeldenummer: 97104731.1
(22) Anmeldetag: 20.03.1997
(51) Int. Cl.: B60H 1/00, B60R 16/02, B60N 2/42

(54) **Fahrzeugklimatisierungseinrichtung mit sonneneinstrahlungsabhängig verstellbarer Luftleitvorrichtung**
Vehicle air-conditioning with air directing means regulated by solar radiation
Conditionnement d'air pour véhicule avec dispositif pour diriger l'air, réglable en fonction du rayonnement solaire

(30) Priorität: 02.05.1996 DE 19617562
(43) Veröffentlichungstag der Anmeldung: 05.11.1997
(73) Patentinhaber: DaimlerChrysler AG, 70567 Stuttgart (DE)
(72) Erfinder: Heinle, Dieter, 73655 Plüderhausen (DE); Maué, Jürgen, 73235 Weilheim (DE); Rössner, Wolfgang, 91578 Leutershausen (DE); Wahl, Dietrich, Dr., 70499 Stuttgart (DE)

(56) Entgegenhaltungen:
- US-A- 4 434 932
- US-A- 5 056 421
- US-A- 5 072 105

## Beschreibung

Die Erfindung bezieht sich auf eine Fahrzeugklimatisierungseinrichtung nach dem Oberbegriff des Anspruchs 1. Mit einer derartigen Einrichtung läßt sich die Klimatisierung eines Fahrzeuginnenraums so vornehmen, daß die Strömungscharakteristik der über eine oder mehrere Luftausströmdüsen in den Innenraum eingeblasenen Klimatisierungsluft sonneneinstrahlungsabhängig verändert werden kann. Dazu wird eine automatisch verstellbare Luftleitvorrichtung an der jeweiligen Luftausströmdüse von einer Klimatisierungssteuereinheit geeignet angesteuert.

Eine Fahrzeugklimatisierungseinrichtung der eingangs genannten Art ist in der Patentschrift US 4.434.932 beschrieben. Bei dieser Einrichtung ist die jeweilige Luftleitvorrichtung von der Klimatisierungssteuereinheit mittels eines Steuersignals ansteuerbar, das bei zunehmender Signalhöhe die Luftleitvorrichtung dazu veranlaßt, den austretenden Luftstrom stärker auf den Bereich eines zugehörigen Fahrzeugsitzes zu richten, während die Luftleitvorrichtung die ausströmende Luft bei abnehmender Signalhöhe immer mehr vom Bereich dieses Sitzes weglenkt bzw. abhält. Das Steuersignal wird in Abhängigkeit von den Ausgangssignalen einer Sonneneinstrahlungssensorik, den Ausgangssignalen einer Außentemperatursensorik und einer ermittelten Differenz zwischen einem vorgebbaren Innenraumtemperatur-Sollwert und einem von einer Innenraumtemperatursensorik gemessenen Innenraumtemperatur-Istwert erzeugt. Seine Signalhöhe wird um einen gewissen Wert zur Erzielung einer stärkeren Klimatisierungskühlwirkung erhöht, wenn die gemessene Sonneneinstrahlungsintensität einen vorgegebenen Schwellwert überschreitet. Dabei kann die Sonneneinstrahlungssensorik zur getrennten Erfassung der Sonneneinstrahlung auf der linken und der rechten Fahrzeugseite ausgelegt sein, so dass dann die Fahrzeugsitzbereiche auf der linken bzw. rechten Fahrzeugseite getrennt entsprechend der Sonneneinstrahlung auf der jeweiligen Fahrzeugseite klimatisiert werden können. Zudem kann unter Verwendung einer Sitzbelegungssensorik bewirkt werden, dass die automatische Einstellung der Luftleitvorrichtungen jeweils nur bezüglich derjenigen Fahrzeugsitze vorgenommen wird, auf denen sich ein Fahrzeuginsasse befindet.

In der US 5,072,105 wird eine Fahrzeugklimatisierungseinrichtung beschrieben, die eine Sonneneinstrahlungssensorik und eine Luftleitvorrichtung aufweist, mit welcher die Luftrichtung horizotal und vertikal verstellbar ist. Mit dieser Regelung der horizontalen und vertikalen Verstellung der Luftverteilung wird die Luftmenge zur sonnenbeschienenen Seite erhöht. Je nach Sonneneinstrahlung wird der Luftstrahl auf alle sonnenbeschienenen Teile des Insassen, beispielsweise direkt auf den Kopf oder auf den gesamten Körper des Insassen gerichtet.

Der Erfindung liegt als technisches Problem die Bereitstellung einer Fahrzeugklimatisierungseinrichtung der eingangs genannten Art zugrunde, mit der sich eine vergleichsweise komfortable Klimatisierung für die einzelnen Bereiche eines jeweiligen Fahrzeugsitzes durch gezieltes Einstellen der jeweiligen Luftleitvorrichtungen bewirken lässt.

Die Erfindung löst dieses Problem durch die Bereitstellung einer Fahrzeugklimatisierungseinrichtung mit den Merkmalen des Anspruchs 1. Bei dieser Einrichtung ist die Sonneneinstrahlungssensorik so ausgelegt, dass sie nicht nur die Intensität, sondern auch die Richtung der einfallenden Sonnenstrahlung erfassen kann. Mit diesen Informationen und fahrzeugspezifischen geometrischen Daten, insbesondere hinsichtlich der Lage der Fahrzeugsitze im Fahrzeuginnenraum und der Lage der Fahrzeugfensterflächen, vermag die Klimatisierungssteuereinheit dann für den jeweiligen Fahrzeugsitz die lokale Sonneneinstrahlung ortsaufgelöst für jede Region des gesamten Bereiches eines Fahrzeugsitzes und damit für jeden Körperbereich eines ggf. auf dem Sitz befindlichen Fahrzeuginsassen zu bestimmen. Die Klimatisierungssteuereinheit erzeugt die Steuerbefehle zur automatischen Einstellung der dem jeweiligen Sitz zugeordneten Luftleitvorrichtungen in Abhängigkeit von dieser Einstrahlungsinformation, so dass die klimatisierende Kühlluft gezielt auf diejenigen Sitzregionen und damit auf diejenigen Körperbereiche eines auf dem Sitz befindlichen Insassen gerichtet werden kann, die am stärksten der Sonneneinstrahlung unterliegen.

Eine bevorzugte Ausführungsform der Erfindung ist in den Zeichnungen dargestellt und wird nachfolgend beschrieben. Hierbei zeigen:
- Fig. 1: ein Blockdiagramm einer Fahrzeugklimaanlage mit sonneneinstrahlungsabhängiger Klimatisierungsluftführung,
- Fig. 2: eine Schnittansicht eines Klimagerätes der Fahrzeugklimaanlage von Fig. 1 und
- Fig. 3: eine Perspektivansicht des vorderen Innenraumbereichs des die Fahrzeugklimaanlage von Fig. 1 beinhaltenden Kraftfahrzeugs.

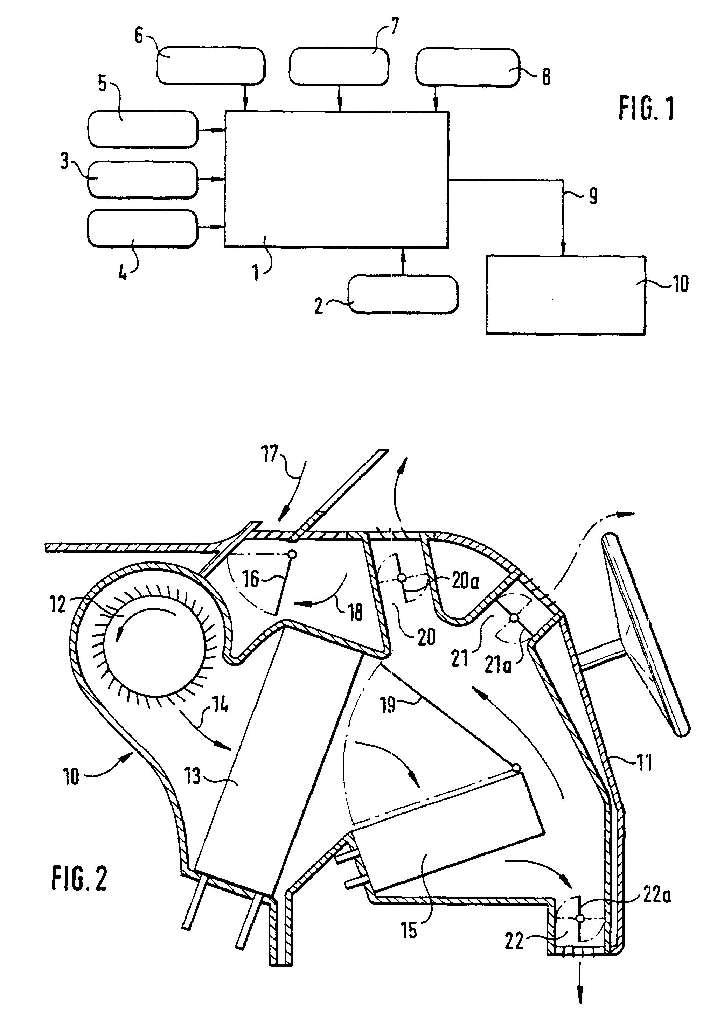

Die in Fig. 1 als Blockdiagramm gezeigte Fahrzeugklimatisierungseinrichtung in Form einer Fahrzeugklimaanlage leistet eine automatische Klimaregelung des Innenraums eines Kraftfahrzeuges und enthält dazu als zentrale Klimatisierungssteuereinheit einen Klimaregler (1), der unter anderem einen Rechner umfaßt. Der Klimaregler (1) verarbeitet die ihm zugeführten Ausgangssignale verschiedener Sensoren, insbesondere einer Innenraumtemperatursensorik (2) zur Messung der Lufttemperatur im Fahrzeuginnenraum, einer Außentemperatursensorik (3) zur Messung der Außenlufttemperatur, einer Temperatursensorik (4) zur Messung der Lufttemperatur eines Heizungswärmeübertragers der Klimaanlage sowie einer Sonneneinstrahlungssensorik (5), die so ausgelegt ist, daß sie sowohl die Intensität als auch die Richtung der auf das Fahrzeug bzw. in den Fahrzeuginnenraum einfallenden Sonnenstrahlung erfaßt. Eine derartige Sonneneinstrahlungssensorik ist Stand der Technik und besteht aus einem oder mehreren Sonnensensorelementen, die an geeigneter Stelle an der Außenseite des Fahrzeugs oder innerhalb der Fahrzeugkabine, z.B. an der Oberseite eines Armaturenbretts, angebracht sind.

Über ein benutzerbetätigbares Innenraumtemperatur-Sollwertstellglied (6) erhält der Klimaregler (1) die Information über die vom Benutzer gewünschte Innenraumtemperatur, die er zur Innenraumtemperaturregelung benötigt. Des weiteren erhält der Klimaregler (1) über eine Sitzbelegungssensorik (7) eine Information darüber, auf welchen Fahrzeugsitzen sich jeweils ein Fahrzeuginsasse befindet. Diese Sitzbelegungssensorik (7) kann z.B. in herkömmlicher Weise aus in den Sitzflächen angeordneten elektrischen Schaltelementen bestehen, die jeweils schalten, sobald ein Fahrzeuginsasse auf dem betreffenden Sitz Platz nimmt. Alternativ kann die Sitzbelegungssensorik auch aus elektrischen Schaltelementen bestehen, die in den Sicherheitsgurtmechanismen untergebracht sind und schalten, wenn der jeweilige Fahrzeuginsasse den Sicherheitsgurt anlegt. In Betracht kommt alternativ auch eine manuelle Sitzbelegungssensorik, bei welcher der Fahrzeuginsasse über eine entsprechende Taste seine Anwesenheit anzeigt. Als weitere Alternative kann die Sitzbelegungssensorik aus Infrarotsensoren aufgebaut sein. Dem Fahrersitz braucht nicht notwendigerweise ein sitzbelegungserkennendes Sensorelement zugeordnet werden, da sich die Belegung desselben im allgemeinen durch den aktivierten Fahrzeugbetrieb ergibt.

Als weitere Eingangssignalinformation empfängt der Klimaregler (1) die Ausgangssignale einer Sitzpositionssensorik (8) herkömmlicher Bauart, wie sie beispielsweise in automatischen Sitzverstellsystemen zum Einsatz kommt, bei denen der Benutzer die verschiedenen, verstellbaren Sitzelemente durch Aktivieren einer Memory-Funktion mittels Betätigen eines einzigen zugehörigen Bedienelementes in vorab abgespeicherte Positionen verbringen kann, wobei die Sitzpositionssensorik das Erreichen der gewünschten Positionen der einzelnen Sitzelemente überwacht. Über die Sitzpositionssensorik erhält der Klimaregler (1) folglich eine genaue Information über die räumliche Lage des jeweiligen Fahrzeugsitzes im Fahrzeuginnenraum und damit auch über die räumliche Lage eines ggf. auf dem Sitz befindlichen Fahrzeuginsassen.

Mit den oben angegebenen Eingangsinformationen vermag der Klimaregler (1) die momentane Klimatisierungssituation für den Fahrzeuginnenraum zu erfassen und führt in geeigneter Weise eine automatische Klimaregelung durch, die das Belüften, Heizen oder Kühlen desselben umfaßt. Dazu gibt der Klimaregler (1) Steuersignale (9) an ein Klimagerät (10) ab, welches in einer durch die Steuersignale (9) bestimmten Weise Luft temperiert, d.h. auf die erforderliche Temperatur bringt, und in den Innenraum einbläst.

Fig. 2 zeigt eine mögliche Auslegung des Klimagerätes (10) in eingebauter Lage innerhalb des Bereichs eines Armaturenbretts (11) des Kraftfahrzeugs. Das Klimagerät (10) beinhaltet ein von einem Elektromotor angetriebenes Luftansauggebläse (12), einen Kältemittelverdampfer (13) zur Kühlung des vom Gebläse (12) angesaugten Luftstroms (14), einen strömungsabwärts anschließenden Heizungswärmeübertrager (15), eine Umluftklappe (16) zur Steuerung der wahlweisen Ansaugung von Frischluft (17) oder Umluft (18), eine Luftmischklappe (19) zur Steuerung des Mischungsverhältnisses von mittels des Heizungswärmeübertragers (15) erwärmter Luft zu nicht erwärmter, am Heizungswärmeübertrager vorbeigeführter Luft sowie eine Mehrzahl von Klimatisierungsluftkanälen, speziell einen Entfroster-Luftkanal (20), einen Belüftungs-Luftkanal (21), einen Fußraum-Luftkanal (22) sowie einen nicht gezeigten Fondraum-Luftkanal.

Jeder Luftkanal (20, 21, 22) verfügt über wenigstens eine zugehörige Luftklappe (20a, 21a, 22a). Diese Luftklappen (20a, 21a, 22a) sowie die Umluftklappe (16) und die Luftmischklappe (19) werden über nicht gezeigte Aktuatoren betätigt, die vom Klimaregler (1) mittels der Steuersignale (9) angesteuert werden. Mit den Steuersignalen (9) steuert der Klimaregler (1) auch die übrigen Komponenten des Klimagerätes (10) zur Erzielung der automatischen Klimaregelung. Die Drehzahl des Luftansauggebläses (12) und die Luftmischklappe (19) werden automatisch so geregelt, daß die Lufttemperatur im Fahrzeuginnenraum möglichst rasch den vorgegebenen Sollwert erreicht und dann beibehält.

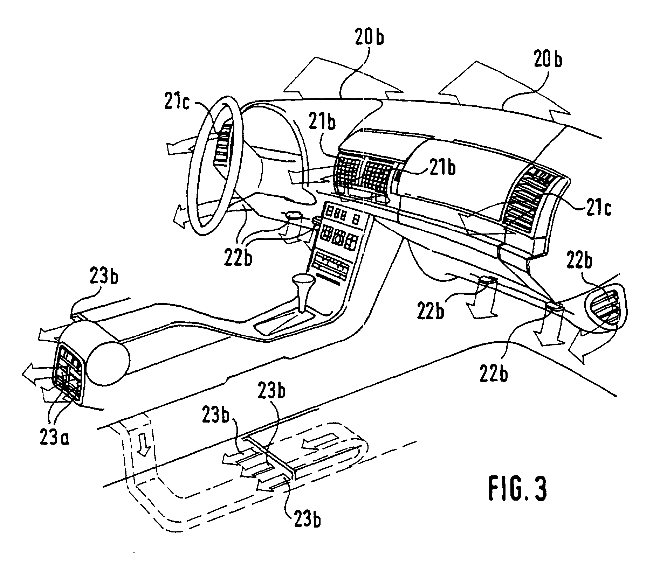

Die Klimatisierungsluftkanäle (20, 21, 22) besitzen jeweils eine oder mehrere Auslaßöffnungen, an denen jeweils eine Ausströmdüse angeordnet ist. Solche Ausströmdüsen sind in Fig. 3 zu erkennen, wobei dort die Entfroster-Ausströmdüsen (20b), die mittleren Belüftungs-Ausströmdüsen (21b), die seitlichen Belüftungs-Ausströmdüsen (21c), die Fußraum-Ausströmdüsen (22b) sowie die mittleren (23a) und seitlichen Fondraum-Ausströmdüsen (23b) gezeigt sind. Wie aus Fig. 3 weiter zu erkennen, besitzt jedenfalls ein Teil der Ausströmdüsen (21b, 21c, 23a) Einsätze in Form von verstellbaren Luftleitgittern als Luftleitvorrichtungen, mit denen die Richtung der ausströmenden Luft verändert werden kann. Diese Luftleitgitter sind erfindungsgemäß analog zu den in Fig. 2 gezeigten Klappen über nicht explizit dargestellte Aktuatoren betätigbar, welche ihrerseits vom Klimaregler (1) über die Steuersignale (9) angesteuert werden können.

Bei den meisten bekannten Klimatisierungseinrichtungen kann die Verstellung der Luftleitgitter nur von Hand vorgenommen werden, was häufige Stelleingriffe seitens der Fahrzeuginsassen erfordert. Bei starker Sonneneinstrahlung erwärmen sich die direkt vom Sonnenlicht getroffenen Körperteile der Insassen sehr stark, weshalb letztere versuchen, die zur Kühlung in den Fahrzeuginnenraum strömende Luft mittels geeigneter Einstellung der Luftleitgitter auf die von der Sonne beschienenen Körperteile zu richten. Bei häufiger Fahrtrichtungsänderung sind entsprechend oft solche Verstellvorgänge der Luftleitgitter von Hand zur Änderung der Luftausblasrichtung vonnöten. Die erfindungsgemäße selbsttätige Luftleitgitterverstellung macht es hingegen möglich, die Luftleitgitter automatisch so einzustellen, daß die ausströmende, kühlende Klimatisierungsluft stets vorrangig auf die durch die Sonnenbestrahlung am stärksten wärmebelasteten Körperregionen eines Fahrzeuginsassen gerichtet wird. Die Geschwindigkeiten und Temperaturen der aus den Ausströmdüsen austretenden Luftströmungen werden dabei automatisch vom Klimaregier (1) so geregelt, daß sich die Fahrzeuginsassen auch an den besonnten Körperregionen thermisch komfortabel fühlen. Dies erübrigt häufige manuelle Luftleitgitterverstellungen zur Einstellung eines global und lokal thermisch komfortablen Innenraumklimas, insbesondere bei sommerlichen Witterungsbedingungen.

Im Detail wird dies von der Klimaanlage gemäß der Figuren 1 bis 3 wie folgt erreicht. Der Klimaregler (1) verarbeitet die Ausgangssignale der oben angegebenen Sensorikeinheiten (2 bis 5, 7, 8) und des Innenraumtemperatur-Sollwertstellglieds (6) und generiert in Abhängigkeit davon die geeigneten Steuersignale (9) zur automatischen Ansteuerung der Komponenten des Klimagerätes (10). Dies beinhaltet die Steuerung der Drehzahl des Luftansauggebläses (12), sowie der Stellungen der Umluftklappe (16), der Luftmischklappe (19) und der Luftklappen (20a, 21a, 22a) in den verschiedenen Klimatisierungskanälen (20 bis 22) und insbesondere auch der Stellungen der verschiedenen Luftleitgitter der Ausströmdüsen (21b, 21c, 23a), um die Konditionierung und Verteilung der dem Fahrzeuginnenraum zuzuführenden Luft situationsgerecht vorzunehmen.

Dazu gehört zum einen die Maßnahme, die Innenraumlufttemperatur möglichst rasch auf den vorgegebenen Sollwert einzuregeln und dort zu halten. Zum anderen beinhaltet dies eine selbsttätig sonneneinstrahlungsabhängig optimierte Einstellung der Ausblasrichtungen der aus den verschiedenen Ausströmdüsen austretenden Klimatisierungsluftströme durch geeignete Einstellung der Luftleitgitter. Als Voraussetzung hierfür sind im Klimaregler (1) die erforderlichen fahrzeugspezifischen geometrischen Daten gespeichert, um aus der Richtung der einfallenden Sonnenstrahlung ermitteln zu können, welche Fahrzeuginnenraumbereiche jeweils von direktem Sonnenlicht getroffen werden. Der Klimaregler (1) führt dann einen vom Fachmann ohne weiteres implementierbaren Algorithmus aus, mit dem aus diesen fahrzeugspezifischen geometrischen Daten und den Daten über die Richtung der einfallenden Sonnenstrahlung, die er aus den Signalen der Sonneneinstrahlungssensorik (5) gewinnt, ermittelt wird, ob und ggf. welche Fahrzeuginnenraumbereiche von direkter Sonnenstrahlung betroffen sind. Um daraus auf die jeweils direkt von der Sonne beschienenen Körperregionen der Fahrzeuginsassen schließen zu können, wertet der Klimaregler (1) außerdem die von der Sitzpositionsensorik (8) und der Sitzbelegungssensorik (7) erhaltenen Signale aus.

Aus den Signalen der Sitzbelegungssensorik (7) erkennt er, auf welchen Fahrzeugsitzen sich überhaupt ein Fahrzeuginsasse befindet, so daß eine sonneneinstrahlungsabhängige Verstellung jeweils nur derjenigen Luftleitgitter vorgenommen zu werden braucht, die Fahrzeugsitzen zugeordnet sind, auf denen sich ein Fahrzeuginsasse befindet. Aus den Signalen der Sitzpositionssensorik (8) erhält der Rechner im Klimaregler (1) eine genaue Information über die räumliche Lage jedes Fahrzeugsitzes im Fahrzeuginnenraum, und zwar individuell für jedes verstellbare Sitzelement eines jeweilige Sitzes. Daraus vermag der Klimaregler (1) die räumliche Lage der einzelnen Körperbereiche der im Fahrzeuginnenraum befindlichen Insassen zu ermitteln. Dies erlaubt ihm zusammen mit den gewonnenen Daten über die jeweils von direkter Sonneneinstrahlung betroffenen Fahrzeuginnenraumbereiche die Bestimmung der räumlichen Lage der direkt von der Sonne beschienenen Körperbereiche der jeweiligen Fahrzeuginsassen. In Abhängigkeit von dieser Information generiert der Klimaregler (1) als Teil der Steuersignale (9) Steuerbefehle für die Aktuatoren der horizontal und vertikal verstellbaren Luftleitgitter der Ausströmdüsen der einzelnen Klimatisierungskanäle derart, daß die ausströmende, konditionierte Luft vorrangig auf die direkter Sonneneinstrahlung unterworfenen Körperbereiche der im Fahrzeuginnenraum sitzenden Insassen gerichtet wird. Gleichzeitig wird vom Klimaregler (1) die Spannung des Gebläsemotors des Luftansauggebläses (12) und damit dessen Drehzahl so geregelt, daß dieses einen den thermischen Komfortanforderungen entsprechenden Luftdurchsatz liefert.

Als weitere Maßnahme nimmt die Klimaanlage eine außentemperaturabhängige Einstellung der Luftleitgitter vor. Bei tiefen Außentemperaturen sind die Fahrzeuginsassen einem beträchtlichen Wärmestrahlungsaustausch mit den kalten Scheiben der Fahrzeugkabine ausgesetzt. In solchen Fällen ist es günstig, diejenigen Körperbereiche, z.B. die Schultern, der Fahrzeuginsassen, welche primär Wärme an die Scheiben abstrahlen, gezielt mit Warmluft zu beaufschlagen. Die Klimaanlage ermöglicht dies dadurch, daß sie bei unterhalb eines vorgebbaren Schwellwertes liegenden Außentemperaturen die Luftleitgitter derjenigen Ausströmdüsen, die belegten Fahrzeugsitzen zugeordnet sind, automatisch so einstellt, daß Warmluft zusätzlich zur Beheizung des Fußraumes auch vorrangig auf diese Körperbereiche gerichtet wird.

Eine weitere selbsttätige Luftleitgitterverstellung nimmt die Klimaanlage im Abkühl- oder Aufheizungsfall vor, wenn die Differenz zwischen Innentemperatur-Sollwert und Innentemperatur-Istwert einen vorgegebenen Betrag überschreitet. In diesem Fall besteht der Bedarf, die Fahrzeuginsassen gezielt mit kalter bzw. erwärmter Luft anzublasen, wozu die Klimaanlage die Luft entsprechend konditioniert und die Luftleitgitter der Ausströmdüsen so einstellt, daß im Kühlbetrieb vorrangig und im Heizbetrieb zusätzlich zu den Füßen der Oberkörper- und Gesichtsbereich des jeweiligen Fahrzeuginsassen angeblasen wird.

Die beschriebene Klimaanlage bietet somit einen hohen Klimatisierungskomfort, der insbesondere die gezielte Kühlung einzelner, von direkter Sonneneinstrahlung betroffener Körperregionen umfaßt. Herkömmliche Klimatisierungseinrichtungen, bei denen die Luftleitgitter nur von Hand verstellbar sind, können relativ einfach durch Nachrüstung mit Aktuatoren zur Betätigung der Luftleitgitter und durch Implementierung des beschriebenen Algorithmus zur sonneneinstrahlungs- und sitzpositionsabhängigen Erzeugung entsprechender Steuerbefehle für die Aktuatoren im Rechner des Klimareglers (1) in erfindungsgemäße Klimatisierungseinrichtungen umgewandelt werden.

## Patentansprüche

1. Fahrzeugklimatisierungseinrichtung mit
- wenigstens einem Klimatisierungsluftkanal (21, 23), der eine oder mehrere Luftausströmdüsen (21b, 21c, 23a) umfaßt, die jeweils eine automatisch verstellbare Luftleitvorrichtung aufweisen,
- einer Sonneneinstrahlungssensorik (5) und
- einer Klimatisierungssteuereinheit (1), welche Steuerbefehle zur automatischen Einstellung der jeweiligen Luftleitvorrichtung wenigstens in Abhängigkeit von den Ausgangssignalen der Sonneneinstrahlungssensorik erzeugt,
**dadurch gekennzeichnet, daß**
die Fahrzeugklimatisierungseinrichtung eine Sitzpositionssensorik umfaßt und die Klimatisierungssteuereinheit (1) bei der ortsaufgelösten Ermittlung der Sonneneinstrahlung über den Bereich eines Fahrzeugsitzes hinweg die Ausgangssignale der Sitzpositionssensorik zur Bestimmung der räumlichen Lage der verschiedenen Fahrzeugsitzbereiche verwendet und in Abhängigkeit davon die Steuerbefehle zur automatischen Einstellung des oder der diesem Fahrzeugsitz zugeordneten Luftleitvorrichtungen erzeugt, so dass die klimatisierende Kühlluft gezielt auf diejenigen Sitzregionen und damit auf diejenigen Körperbereiche eines auf dem Sitz befindlichen Insassen gerichtet werden kann, die am stärksten der Sonneneinstrahlung unterliegen.

2. Fahrzeugklimatisierungseinrichtung nach Anspruch 1,
**dadurch gekennzeichnet, daß**
sie eine Außentemperatursensorik (3) umfasst und die Klimatisierungssteuereinheit (1) die Steuerbefehle zur automatischen Einstellung der einen oder mehreren Luftleitvorrichtungen in Abhängigkeit von den Ausgangssignalen der Außentemperatursensorik dergestalt erzeugt, dass zugeführte Warmluft zum Fußraum und von der wenigstens einen Luftleitvorrichtung vorrangig in diejenigen Sitzregionen des zugehörigen Fahrzeugsitzes geleitet wird, welche einer Fahrzeugscheibe benachbart sind.

3. Fahrzeugklimatisierungseinrichtung nach Anspruch 1 oder 2,
**dadurch gekennzeichnet, daß**
sie eine Innenraumtemperatursensorik (2) und eine Vorrichtung zur Bestimmung der Differenz zwischen einem vorgebbaren Innenraumtemperatur-Sollwert und dem von der Innenraumtemperatursensorik erfassten Innenraumtemperatur-Istwert umfasst und die Klimatisierungssteuereinheit (1) die Steuerbefehle zur automatischen Einstellung der einen oder mehreren Luftleitvorrichtungen in Abhängigkeit von der Differenz -zwischen dem Innenraumtemperatur-Sollwert und dem Innenraumtemperatur-Istwert dergestalt erzeugt, dass dann, wenn diese Innenraumtemperaturdifferenz einen vorgebbaren Betrag überschreitet, zugeführte Warmluft zusätzlich zum Fussraum bzw. Kaltluft von der wenigstens einen Luftleitvorrichtung vorrangig in eine mittige, obere Region des zugehörigen Fahrzeugsitzes geleitet wird.

## Claims

1. Vehicle air conditioning system with
- at least one air conditioning air duct (21, 23) comprising one or more air outlets (21b, 21c, 23a), each provided with an automatically adjustable air guiding device,
- an insolation sensor system (5) and
- an air conditioning control unit (1) generating control commands for the automatic adjustment of the respective air guiding device at least in dependence on the output signals of the insolation sensor system,
**characterised in that** the vehicle air conditioning system incorporates a seat position sensor system, and **in that** the air conditioning control unit (1) uses the output signals of the seat position sensor system to determine the spatial position of the various vehicle seat areas when determining local insolation over the area of a vehicle seat and, in dependence thereon, generates the control commands for the automatic adjustment of the air guiding device or devices assigned to the relevant vehicle seat, enabling the conditioned cool air to be selectively directed to those seat regions and thus those body areas of a person occupying the seat which are subjected to the strongest insolation.

2. Vehicle air conditioning system according to claim 1,
**characterised in that** it incorporates an ambient temperature sensor system (3), and **in that** the air conditioning control unit (1) generates the control commands for the automatic adjustment of the one or more air guiding devices in dependence on the output signals of the ambient temperature sensor system in a way to ensure that warm air fed to the footwell and from the at least one air guiding device is, as a matter of priority, directed to those seat regions of the associated vehicle seat which are adjacent to a vehicle window.

3. Vehicle air conditioning system according to claim 1 or 2,
**characterised in that** it incorporates an interior temperature sensor system (2) and a device for determining the difference between a presentable desired interior temperature value and the actual interior temperature value detected by the interior temperature sensor system, and **in that** the air conditioning control unit (1) generates the control commands for the automatic adjustment of the one or more air guiding deuces in dependence on the difference between the desired interior temperature value and the actual interior temperature value in a way to ensure that, if this interior temperature difference exceeds a presentable value, additional warm air is directed to the footwell or cool air from the at least one air guiding device is, as a matter of priority, directed to a central upper region of the associated vehicle seat.

## Revendications

1. Dispositif de climatisation pour un véhicule comportant
- au moins un canal d'air de climatisation (21, 23), qui comprend une ou plusieurs buses de sortie d'air (21b, 21c, 23a), qui comportent chacune un dispositif de guidage de l'air réglable automatiquement,
- un système (5) de détection du rayonnement solaire, et
- une unité (1) de commande de climatisation, qui produit des instructions de commande pour le réglage automatique du dispositif respectif de guidage d'air au moins en fonction des signaux de sortie du système de détection du rayonnement solaire,
**caractérisé en ce que** le dispositif de climatisation pour véhicule comprend un système de détection de position assise et l'unité (1) de commande de climatisation utilise, lors de la détermination à résolution locale du rayonnement solaire entrant, au-dessus de la zone d'un siège du véhicule, les signaux de sortie du système de détection de position assise pour déterminer la position spatiale des différentes zones de sièges du véhicule, et produit, en fonction de cela, les instructions de commande pour le réglage automatique du ou des dispositifs de guidage de l'air, associé(s) à ce siège de véhicule, de sorte que l'air de refroidissement réalisant la climatisation peut être dirigé d'une manière ciblée sur les régions du siège et par conséquent sur les parties du corps d'un passager assis sur le siège, qui sont soumises le plus fortement au rayonnement solaire.

2. Dispositif de climatisation pour véhicule selon la revendication 1, **caractérisé en ce qu'**il comprend un système de détection de la température extérieure (3) et que l'unité de commande de climatisation (1) produit les instructions de commande pour régler automatiquement un ou plusieurs dispositifs de guidage de l'air en fonction des signaux de sortie du système de détection de la température extérieure, de telle sorte que de l'air chaud envoyé soit dirigé vers l'espace où se trouvent les pieds et prioritairement, par le ou les dispositifs de guidage de l'air, vers les régions du siège associé du véhicule, qui sont voisines d'une vitre du véhicule.

3. Dispositif de climatisation du véhicule selon la revendication 1 ou 2, **caractérisé en ce qu'**il comporte un système (2) de détection de la température de l'espace intérieur et un dispositif pour déterminer la différence entre une valeur de consigne pouvant être prédéterminée de la température de l'espace intérieur et la valeur réelle de la température de l'espace intérieur, détectée par le système de détection de la température de l'espace intérieur, et que l'unité de commande de climatisation (1) produit les instructions de commande poux régler automatiquement un ou plusieurs dispositifs de guidage de l'air en fonction de la différence entre la valeur de consigne de la température de l'espace intérieur et la valeur réelle de la température de l'espace intérieur de telle sorte que, lorsque cette différence concernant la température de l'espace intérieur dépasse une valeur pouvant être prédéterminée, de l'air chaud amené soit dirigé en supplément vers l'espace où sont situés les pieds, ou que de l'air froid soit dirigé prioritairement, par le ou les dispositifs de guidage de l'air, dans une région supérieure médiane du siège associé du véhicule.
